# FASCICULE DE BREVET EUROPEEN

(11) **EP 1 927 155 B1**
(45) Date de publication et mention de la délivrance du brevet: **07.04.2010**
(21) Numéro de dépôt: 06808191.8
(22) Date de dépôt: 22.09.2006
(51) Int. Cl.: H01Q 1/22, G06K 19/077

(54) **ANTENNE PLANE OMNIDIRECTIONNELLE ET PROCEDE DE FABRICATION**
OMNIDIREKTIONALE PLANARANTENNE UND HERSTELLUNGSVERFAHREN DAFÜR
PLANAR OMNIDIRECTIONAL ANTENNA AND A METHOD FOR THE PRODUCTION THEREOF

(30) Priorité: 22.09.2005 FR 0509711
(43) Date de publication de la demande: 04.06.2008
(73) Titulaire: COMMISSARIAT A L'ENERGIE ATOMIQUE, 75015 Paris (FR)
(72) Inventeur: SAVRY, Olivier, F-38360 Sassenage (FR)
(74) Mandataire: Hecké, Gérard
(86) Numéro de dépôt international: PCT/FR2006/002173
(87) Numéro de publication internationale: WO 2007/034087

(56) Documents cités:
- WO-A-2005/045992
- GB-A- 2 349 047
- US-A- 5 719 586
- US-A- 6 043 746
- US-B1- 6 644 555

## Description

### Domaine technique de l'invention

L'invention concerne une antenne plane comportant un premier bobinage plan formé sur une face d'un substrat plan, le premier bobinage ayant un axe perpendiculaire au plan du substrat, l'antenne comportant un deuxième bobinage ayant un axe parallèle au plan du substrat.

L'invention concerne également un procédé de fabrication d'une telle antenne.

### État de la technique

De telles antennes planes sont couramment utilisées pour la fabrication d'étiquettes radiofréquences, appelées aussi étiquettes RFID (« Radio Frequency Identification ») ou transpondeur. Ces étiquettes RFID comportent une puce reliée à l'antenne plane qui est destinée à capter une onde magnétique provenant d'un lecteur situé à distance. L'énergie nécessaire au fonctionnement de l'étiquette RFID peut être fournie par l'onde magnétique captée ou par une pile interne pour les étiquettes actives.

Les antennes planes actuelles sont constituées par un bobinage réalisé par un enroulement plan de pistes conductrices, par exemple en spirale, sur le substrat. Ce type d'antenne, dont l'axe du bobinage est perpendiculaire au plan du substrat, n'est sensible qu'à la composante de l'onde magnétique suivant la direction orthogonale au plan du substrat.

Lorsque l'onde magnétique captée par l'antenne provient d'un lecteur situé à plusieurs mètres, l'incidence de l'onde magnétique sur l'antenne est souvent quelconque. L'antenne n'étant sensible qu'à la composante de l'onde magnétique suivant la direction orthogonale au plan du substrat, les composantes de l'onde magnétique comprises dans le plan du bobinage supporté par le substrat ne sont alors pas captées.

Ainsi, pour une puissance d'émission donnée au niveau du lecteur, la qualité de réception de l'antenne dépend de son orientation, ce qui rend aléatoire le fonctionnement de l'étiquette radiofréquence. Pour garantir une distance de lecture fiable et indépendante de l'orientation de l'étiquette RFID, cette dernière doit avoir une antenne non plane, occupant un volume plutôt cubique, un bobinage étant nécessaire dans chaque direction de ce volume, ce qui est contraignant dans beaucoup d'applications.

Le document GB2349047 décrit un lecteur d'étiquettes magnétiques, comportant pour l'émission d'un champ magnétique d'excitation une antenne ayant trois bobinages distincts enroulés autour d'un même substrat plan en matériau magnétique. Les trois bobinages ont des axes perpendiculaires entre eux.
Une telle antenne ne permet pas de recevoir de façon satisfaisante des ondes magnétiques de faible puissance.

### Objet de l'invention

L'invention a pour but de pallier à ces inconvénients en proposant une antenne plane sensible à toutes les composantes d'une onde magnétique d'incidence quelconque et qui permette de recevoir des ondes magnétiques de faible puissance.

Ce but est atteint par une antenne selon les revendications annexées. En particulier, la présente invention prévoit ainsi une antenne plane comportant un premier bobinage plan formé sur une face d'un substrat plan, le premier bobinage ayant un axe perpendiculaire au plan du substrat, l'antenne comportant un deuxième bobinage ayant un axe parallèle au plan du substrat dans lequel le deuxième bobinage est enroulé autour d'une couche mince magnétique déposée sur ladite face du substrat.

Le volume de bouclage de chacun des premier et second bobinages n'est pas « encombré » par la présence de l'autre bobinage, ce qui permet d'éviter des effets de blindage.

Selon un autre aspect de l'invention, le deuxième bobinage est enroulé autour d'une couche mince d'un matériau à forte perméabilité magnétique, c'est-à-dire une perméabilité relative supérieure à 500.

Le second bobinage est sensible à au moins une composante de l'onde magnétique parallèle au plan du substrat. La présence du matériau à forte perméabilité magnétique permet de prévoir une faible section de bouclage du second bobinage, en canalisant et en concentrant les lignes de champ de l'onde magnétique dans sa proximité.

Selon un développement de l'invention, l'antenne comporte un troisième bobinage ayant un axe perpendiculaire aux axes des premier et deuxième bobinages, et enroulé autour d'une couche mince supplémentaire d'un matériau à forte perméabilité magnétique parallèle au plan du substrat. Dans cette variante, le matériau constitutif de chaque couche mince comporte, de préférence, un axe de plus forte susceptibilité parallèle à l'axe du bobinage correspondant. Chaque bobinage est alors destiné à capter la composante de l'onde magnétique selon l'axe dudit bobinage. Les axes des trois bobinages étant perpendiculaires entre eux, l'antenne plane réalise une décomposition de l'onde magnétique incidente en trois composantes dans une base orthogonale liée au substrat.

Un procédé de fabrication d'une antenne selon l'invention comporte, de préférence :
- le dépôt sur le substrat de pistes métallisées constituant le premier bobinage,
- le dépôt de pistes métallisées inférieures du deuxième bobinage,
- le dépôt, parallèlement au plan du substrat, de la couche mince du matériau à forte perméabilité magnétique,
- la formation, sur ladite couche mince et à sa périphérie, respectivement de pistes métallisées supérieures du deuxième bobinage, et de pistes métallisées latérales connectant les pistes métallisées supérieures et inférieures du deuxième bobinage.

### Description sommaire des dessins

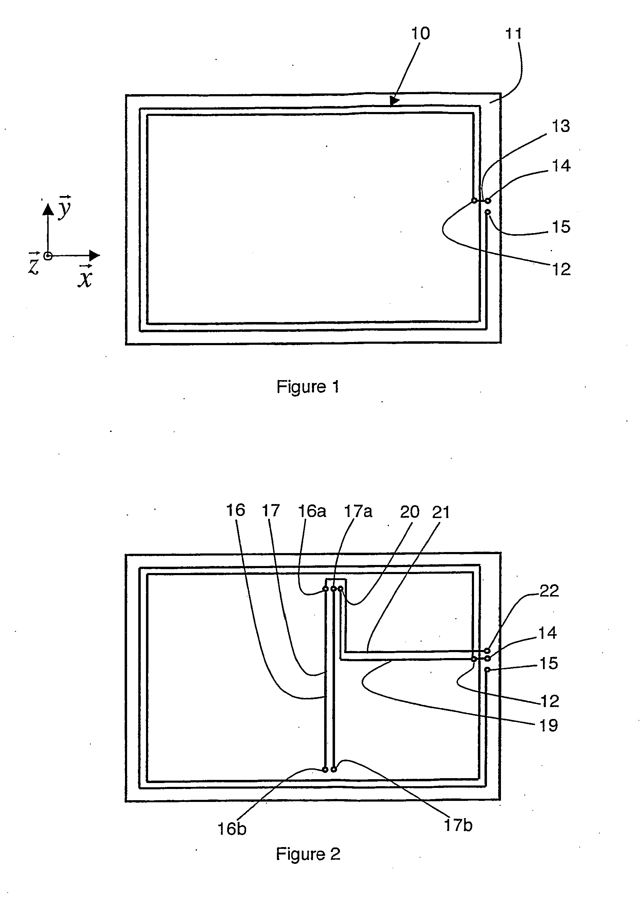

D'autres avantages et caractéristiques ressortiront plus clairement de la description qui va suivre d'un mode particulier de réalisation de l'invention donné à titre d'exemple non limitatif et représenté aux dessins annexés, dans lesquels les figures 1 à 5 illustrent, en vue de dessus, diverses étapes d'un exemple de procédé de fabrication d'une antenne plane conforme à l'invention.

### Description d'un mode particulier de réalisation

Dans le mode de réalisation représenté à la figure 1, un premier bobinage 10 est formé sur une face d'un substrat plan 11 qui peut être réalisé dans tout matériau, par exemple en plastique, en carton ou en papier. Le premier bobinage 10 est constitué par un enroulement plan de pistes conductrices en spirale, avec ici deux spires sensiblement concentriques, de forme rectangulaire. Le premier bobinage 10 est réalisé par exemple avec du cuivre sérigraphié ou par un dépôt d'encre conductrice. On définit une base vectorielle orthogonale (*̅z̅*̅, *̅y̅*̅, *̅z̅*̅) telle que *̅x̅*̅ et *̅y̅*̅ sont parallèles aux axes de symétrie du premier bobinage 10, et *̅z̅*̅ perpendiculaire au plan du substrat 11. L'axe du premier bobinage 10, c'est-à-dire l'axe autour duquel il est enroulé, est parallèle à *̅z̅*̅. Le premier bobinage 10 n'est ainsi pratiquement sensible qu'à la composante selon *̅z̅*̅ d'une onde magnétique incidente émise par un lecteur (non représenté) situé à distance.

Sur la figure 1, le premier bobinage 10 est réalisé à l'aide de deux niveaux superposés de métallisation, séparés par une couche de passivation isolante (non représentée). Deux spires sont formées au niveau inférieur, entre deux extrémités. L'extrémité, extérieure, des spires du premier bobinage 10 constitue un premier plot de connexion 15 du premier bobinage 10. L'autre extrémité 12, intérieure, des spires du premier bobinage 10 est connectée par un via (non représenté) à un segment métallisé 13 formé au niveau supérieur de métallisation. Le segment 13 chevauche, sans contact électrique, les spires du premier bobinage 10 disposées au niveau inférieur. L'extrémité distale du segment 13 constitue un second plot de connexion 14 du premier bobinage 10, disposé à proximité du premier plot de connexion 15.

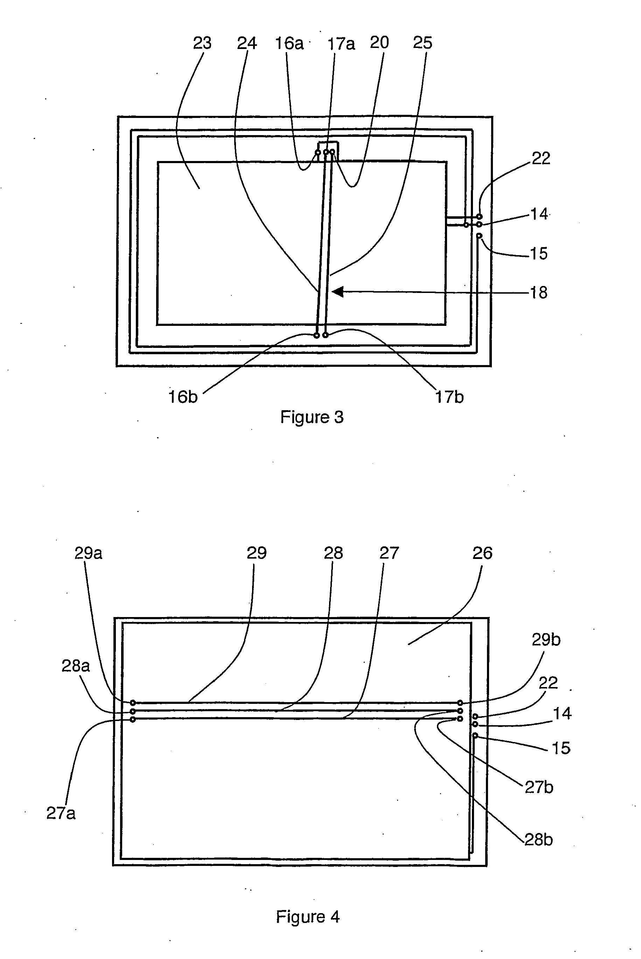

Comme représenté à la figure 2, des pistes métallisées inférieures 16 et 17 d'un deuxième bobinage 18 (figure 3) sont déposées au niveau supérieur de métallisation. Les pistes métallisées inférieures 16 et 17 du second bobinage 18 sont parallèles, rapprochées, et s'étendent entre les spires du premier bobinage 10 suivant l'axe de symétrie du premier bobinage 10 parallèle à *̅y̅*̅. Des plots de connexion, référencés 16a, 16b, et respectivement 17a, 17b, sont disposés aux extrémités des pistes métallisées inférieures 16 et 17. Au niveau supérieur de métallisation, une première piste métallisée de connexion 19 connecte l'extrémité intérieure 12 des spires du premier bobinage 10 à un plot de connexion 20 disposé à proximité du plot de connexion 17a. Sur la figure 2, la piste 19 a sensiblement la forme d'un « L ». Une deuxième piste métallisée de connexion 21 connecte le plot de connexion 16a à un plot de connexion 22 disposé à proximité du plot de connexion 14 du premier bobinage 10.

En référence à la figure 3, une couche mince magnétique 23 est ensuite déposée, parallèlement au plan du substrat 11, sur le niveau supérieur de métallisation. La perméabilité relative du matériau est au moins égale à 100 et de préférence supérieure à 500. La couche mince 23 s'étend dans la partie centrale des spires du premier bobinage 10 et entre les plots de connexion 16a, 16b, 17a, 17b.

Toujours en référence à la figure 3, des pistes métallisées supérieures 24 et 25 du second bobinage 18, parallèles aux pistes 16 et 17, sont formées sur la couche mince 23. Des pistes métallisées latérales (non représentées) sont formées à la périphérie de la couche mince 23, perpendiculairement au plan du substrat 11, pour connecter la piste métallisée supérieure 24 aux plots de connexion 17a et 16b. D'autres pistes métallisées latérales (non représentées) sont également formées à la périphérie de la couche mince 23 pour connecter la piste métallisée supérieure 25 aux plots de connexion 17b et 20.

L'ensemble des pistes métallisées inférieures 16 et 17, supérieures 24 et 25, et latérales, constitue deux spires d'un deuxième bobinage 18 qui est enroulé autour de la couche mince 23. L'axe du deuxième bobinage 18, c'est-à-dire l'axe autour duquel il est enroulé, est parallèle à *̅x̅*̅. Le deuxième bobinage 18 est ainsi essentiellement sensible à la composante selon *̅x̅*̅ d'une onde magnétique incidente.

En référence à la figure 4, une couche électriquement isolante 26 est ensuite déposée sur le substrat 11 de manière à recouvrir la couche mince 23 et le deuxième bobinage 18. Seuls les plots de connexion 14 et 15 du premier bobinage 10 et le plot de connexion 22 du deuxième bobinage 18 ne sont pas recouverts.

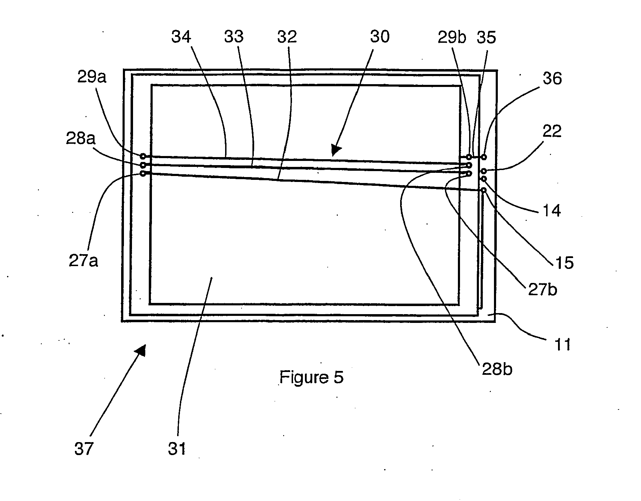

Des pistes métallisées inférieures 27, 28 et 29 d'un troisième bobinage 30 (figure 5) sont ensuite déposées sur la couche isolante 26. Les pistes métallisées inférieures 27, 28 et 29 du troisième bobinage 30 sont parallèles, rapprochées, et s'étendent suivant l'axe de symétrie du premier bobinage 10 parallèle à *̅x̅*̅. Des plots de connexion, respectivement référencés 27a, 27b, 28a, 28b, et 29a, 29b, sont agencés aux extrémités des pistes métallisées inférieures 27, 28 et 29.

En référence à la figure 5, une couche mince supplémentaire 31 d'un matériau à forte perméabilité magnétique est ensuite déposée, parallèlement au plan du substrat 11, sur la couche isolante 26. La perméabilité relative du matériau est, de préférence, de l'ordre de 1000. La couche mince supplémentaire 31 s'étend entre les plots de connexion des pistes métallisées inférieures 27, 28 et 29.

Des pistes métallisées supérieures 32, 33 et 34 du troisième bobinage 30 sont ensuite formées sur la couche mince supplémentaire 31. Des pistes métallisées latérales (non représentées) sont formées à la périphérie de la couche mince supplémentaire 31, perpendiculairement au plan du substrat 11, pour connecter les extrémités de la piste métallisée 32 respectivement au plot de connexion 15 du premier bobinage 10 et au plot de connexion 27a. D'autres pistes métallisées latérales (non représentées) sont également formées à la périphérie de la couche mince supplémentaire 31 pour connecter respectivement les extrémités de la piste métallisée 33 aux plots de connexion 27b et 28a, et de la piste métallisée 34 aux plots de connexion 28b et 29a. Simultanément, un segment métallisé 35 est déposé pour prolonger la métallisation inférieure 29 depuis le plot de connexion 29b. L'extrémité distale du segment de métallisation 35 constitue un plot de connexion 36 du troisième bobinage 30. Sur la figure 5, les pistes 33 et 34 sont sensiblement parallèles aux pistes 27 à 29, tandis que la piste 32 est légèrement inclinée pour faciliter sa connexion au plot 15.

L'ensemble des pistes métallisées inférieures 27, 28 et 29, supérieures 32, 33 et 34, et latérales, constitue trois spires du troisième bobinage 30, enroulées autour de la couche mince supplémentaire 31. L'axe du troisième bobinage 30, c'est-à-dire l'axe autour duquel il est enroulé, est parallèle à *̅y̅*̅. Le troisième bobinage 30 est donc essentiellement sensible à la composante selon *̅y̅*̅ d'une onde magnétique incidente.

La présence des couches minces 23 et 31 d'un matériau à forte perméabilité magnétique permet de compenser la faible section de bouclage du second bobinage 18 et du troisième bobinage 30, en canalisant et en concentrant les lignes de champ de l'onde magnétique dans leur proximité. Pour intensifier et orienter ce phénomène, le matériau magnétique de la couche mince 23 est, de préférence, déposé de manière à avoir un axe de plus forte susceptibilité magnétique orienté pour être parallèle à *̅x̅*̅, et le matériau magnétique de la couche mince supplémentaire 31 déposé avec un axe de plus forte susceptibilité magnétique orienté pour être parallèle à *̅y̅*̅. Pour ce faire, il est nécessaire d'appliquer lors du dépôt un champ magnétique orienté de manière adéquate.

L'antenne plane 37 selon l'invention, pouvant être obtenue par le procédé décrit ci-dessus, comporte donc un substrat plan 11 ayant une face où est formé un premier bobinage plan 10 ayant un axe perpendiculaire au plan du substrat 11, et un deuxième bobinage 18 ayant un axe parallèle au plan du substrat 11 et enroulé autour d'une couche mince 23 d'un matériau à forte perméabilité magnétique déposée sur la face du substrat 11 sur laquelle est formé le premier bobinage 10. Tout autre procédé permettant la fabrication d'une antenne plane 37 présentant ces caractéristiques essentielles de l'invention peut être envisagé. Les pistes métallisées inférieures 16 et 17 du second bobinage 18 peuvent, par exemple, être formés en même temps que le segment métallisé 13, ou dans une étape ultérieure. Dans une variante de réalisation, le second bobinage 18 peut chevaucher le premier bobinage 10 pour augmenter la surface de bouclage du deuxième bobinage 18. Une couche isolante électriquement est alors déposée sur le premier bobinage 10 avant le dépôt des pistes métallisées inférieures 16 et 17 du second bobinage 18.

L'antenne plane 37 décrite ci-dessus comporte en outre un troisième bobinage 30 ayant un axe perpendiculaire aux axes des premier et deuxième bobinages 10, 18, et enroulé autour d'une couche mince supplémentaire 31 d'un matériau à forte perméabilité magnétique parallèle au plan du substrat 11. Le troisième bobinage 30 peut être fabriqué par le procédé ci-dessus, ou par tout procédé de fabrication approprié.

Chaque bobinage 10, 18, 30 est destiné à capter la composante selon son axe d'une onde magnétique incidente. Les axes des trois bobinages 10, 18, 30 étant perpendiculaires entre eux, l'antenne plane 37 comportant les trois bobinages 10, 18, 30 réalise une décomposition de l'onde magnétique incidente en trois composantes dans la base orthogonale (*̅x̅*̅,*̅y̅*̅,*̅z̅*̅) associée au substrat 11. On obtient donc une antenne plane 37 omnidirectionnelle. Avec le procédé de fabrication précédemment décrit, les trois bobinages 10, 18, 30 sont connectés en série, et les signaux sont mesurés entre les plots de connexion 22 et 36. Dans une variante de réalisation, les trois bobinages 10, 18, 30 de l'antenne plane 37 peuvent être montés en parallèle.

Le matériau à forte perméabilité magnétique est, de préférence, de la ferrite frittée ou du Fer Hafnium Nitruré (FeHfN). Le premier matériau présente l'avantage de pouvoir être déposé sur tout type de substrat avec une épaisseur variant d'une dizaine de microns à plusieurs millimètres. Sa fréquence de fonctionnement est limitée à environ 300 MHz. Le second matériau peut être déposé en couche très mince (environ 1 micron) avec une alternance de couches de FeHf nanométriques et de passivations en nitrure pour assurer une faible conductivité. Sa fréquence de fonctionnement est limitée à environ 1 GHz et sa perméabilité relative de l'ordre de 900.

Par ailleurs, les pistes métallisés des deuxième et troisième bobinages 18, 30 peuvent être de tout type approprié, par exemple constituées par des pistes de cuivre sérigraphié ou d'encre conductrice. Les bobinages 18 et 30 s'étendent, de préférence, suivant les axes de symétrie du premier bobinage 10, de sorte que les impédances mutuelles des trois bobinages 10, 18, 30 sont nulles.

Dans le cas où l'antenne plane 37 selon l'invention ne comporte pas le troisième bobinage 30, il est souhaitable que le deuxième bobinage 18 capte les composantes selon *̅x̅*̅ et *̅y̅*̅ de l'onde magnétique incidente. Le matériau magnétique de la couche mince 23 autour de laquelle le second bobinage 18 est enroulé est alors déposé sans axe de plus forte susceptibilité magnétique, pour être omnidirectionnel dans le plan du substrat 11.

Par ailleurs, l'ordre de superposition des bobinages 18 et 30, peut varier suivant les applications.

L'antenne plane 37 selon l'invention permet de fournir des résultats de qualité satisfaisante contrairement à celle décrite dans le document GB2349047 dans laquelle un effet de blindage entre les trois bobinages peut apparaître. En effet, pour chaque bobinage 110, 111 et 122 de l'antenne représentée en figure 22 de ce document, le volume ou la surface de bouclage délimitée par le bobinage considéré est « rempli » par un autre bobinage limitant la pénétration d'ondes magnétiques incidentes par effet de blindage. Au contraire, dans la présente invention, l'influence du premier bobinage 10 sur le fonctionnement (émission et/ou réception) des deuxième et troisième bobinages 18, 30 est nulle car les volumes respectifs de bouclage délimités par les spires de ces bobinages 18, 30 sont situés au dessus du plan du premier bobinage 10.

Pour réduire l'influence des deuxième et troisième bobinage 18, 30 sur le fonctionnement du premier bobinage 10, le nombre de spires des bobinages 18, 30 est très faible et lesdites spires sont très rapprochées, de manière que la surface occupée par les bobinages 18, 30 dans un plan parallèle au substrat 11 est très inférieure à la surface délimitée par le premier bobinage 10. Pour cela, les deuxième et troisième bobinages 18 comportent au maximum quelques spires, de préférence deux pour le deuxième bobinage 18 comme l'illustre la figure 3, et trois pour le troisième bobinage 30 comme l'illustre la figure 5.

## Revendications

1. Antenne plane (37) comportant un premier bobinage (10) plan formé sur une face d'un substrat plan (11), le premier bobinage (10) ayant un axe perpendiculaire au plan du substrat (11), l'antenne comportant un deuxième bobinage (18) ayant un axe parallèle au plan du substrat (11), **caractérisée en ce que** le deuxième bobinage (18) est enroulé autour d'une couche mince (23) d'un matériau à forte perméabilité magnétique déposée sur ladite face du substrat (11).

2. Antenne selon la revendication 1, **caractérisée en ce que** ledit matériau à forte perméabilité magnétique a une perméabilité relative supérieure à 500.

3. Antenne selon la revendication 1 ou 2, **caractérisée en ce qu'**elle comporte un troisième bobinage (30) ayant un axe perpendiculaire aux axes des premier (10) et deuxième (18) bobinages, et enroulé autour d'une couche mince supplémentaire (31) d'un matériau à forte perméabilité magnétique parallèle au plan du substrat (11).

4. Antenne selon la revendication 3, **caractérisée en ce que** le matériau à forte perméabilité de la couche mince supplémentaire (31) a une perméabilité relative supérieure à 500.

5. Antenne selon l'une des revendications 3 et 4, **caractérisé en ce qu'**une couche électriquement isolante (26) est disposée entre les deuxième (18) et troisième (30) bobinages.

6. Antenne selon l'une des revendications 3 à 5, **caractérisée en ce que** les deuxième (18) et troisième (30) bobinages s'étendent suivant les axes de symétrie du premier bobinage (10).

7. Antenne selon l'une des revendications 1 à 6, **caractérisée en ce que** ledit matériau à forte perméabilité magnétique comporte un axe de plus forte susceptibilité magnétique parallèle à l'axe du bobinage (18, 30) correspondant.

8. Antenne selon la revendication 3, **caractérisée en ce que** chacun des deuxième et troisième bobinages (18, 30) couvre une surface, dans un plan parallèle au plan du substrat (11), très inférieure à la surface délimitée par le premier bobinage (10).

9. Procédé de fabrication d'une antenne selon l'une quelconque des revendications 1 à 8, **caractérisé en ce qu'**il comprend :
- le dépôt sur le substrat (11) de pistes métallisées constituant le premier bobinage (10),
- le dépôt de pistes métallisées inférieures (16, 17) du deuxième bobinage (18),
- le dépôt, parallèlement au plan du substrat (11), de la couche mince (23) du matériau à forte perméabilité magnétique,
- la formation, sur ladite couche mince (23) et à sa périphérie, respectivement de pistes métallisées supérieures (24, 25) du deuxième bobinage (18), et de pistes métallisées latérales connectant les pistes métallisées supérieures (24, 25) et inférieures (16, 17) du deuxième bobinage (18).

10. Procédé de fabrication selon la revendication 9, **caractérisé en ce qu'**il comprend, de plus :
- le dépôt d'une couche électriquement isolante (26) recouvrant la couche mince (23) et le deuxième bobinage (18),
- le dépôt sur la couche électriquement isolante (26) de pistes métallisées inférieures (27, 28, 29) d'un troisième bobinage (30),
- le dépôt, parallèlement au plan du substrat (11), d'une couche mince supplémentaire (31) d'un matériau à forte perméabilité magnétique,
- la formation, sur ladite couche mince supplémentaire (31) et à sa périphérie, respectivement de pistes métallisées supérieures (32, 33, 34) du troisième bobinage (30), et de pistes métallisées latérales connectant les pistes métallisées supérieures (32, 33, 34) et inférieures (27, 28, 29) du troisième bobinage (30).

## Claims

1. A flat antenna (37) comprising a first flat coil (10) formed on a surface of a flat substrate (11), the first coil (10) having an axis perpendicular to the plane of the substrate (11), the antenna comprising a second coil (18) having an axis parallel to the plane of the substrate (11), **characterized in that** the second coil (18) is wound around a thin layer (23) of a high magnetic permeability material deposited on said surface of the substrate (11).

2. The antenna according to claim 1, **characterized in that** said high magnetic permeability material has a relative permeability of more than 500.

3. The antenna according to claim 1 or 2, **characterized in that** it comprises a third coil (30) having an axis perpendicular to the axes of the first (10) and second (18) coils, and wound around an additional thin layer (31) of a high magnetic permeability material parallel to the plane of the substrate (11).

4. The antenna according to claim 3, **characterized in that** the high magnetic permeability material of said additional thin layer (31) has a relative permeability of more than 500.

5. The antenna according to one of claims 3 and 4, **characterized in that** an electrically insulating layer (26) is arranged between the second (18) and third (30) coils.

6. The antenna according to one of claims 3 to 5, **characterized in that** the second (18) and third (30) coils extend along the axes of symmetry of the first coil (10).

7. The antenna according to one of claims 1 to 6, **characterized in that** said high magnetic permeability material comprises an axis of greatest magnetic susceptibility parallel to the axis of the corresponding coil (18, 30).

8. The antenna according to claim 3, **characterized in that** each of the second and third coils (18, 30) covers a much smaller surface, in a plane parallel to the plane of the substrate (11), than the surface delineated by the first coil (10).

9. A method of production of an antenna according to any one of claims 1 to 8, **characterized in that** it comprises:
- deposition on the substrate (11) of metallized tracks forming the first coil (10),
- deposition of bottom metallized tracks (16, 17) of the second coil (18),
- deposition, parallel to the plane of the substrate (11), of the thin layer (23) of high magnetic permeability material,
- formation, on said thin layer (23) and at the periphery thereof, respectively of top metallized tracks (24, 25) of the second coil (18) and of lateral metallized tracks connecting the top (24, 25) and bottom (16, 17) metallized tracks of the second coil (18).

10. The method of production according to claim 9, **characterized in that** it further comprises:
- deposition of an electrically insulating layer (26) covering the thin layer (23) and the second coil (18),
- deposition on the electrically insulating layer (26) of bottom metallized tracks (27, 28, 29) of a third coil (30),
- deposition, parallel to the plane of the substrate (11), of an additional thin layer (31) of high magnetic permeability material,
- formation, on said additional thin layer (31) and at the periphery thereof, respectively of top metallized tracks (32, 33, 34) of the third coil (30) and of lateral metallized tracks connecting the top (32, 33, 34) and bottom (27, 28, 29) metallized tracks of the third coil (30).

## Patentansprüche

1. Planarantenne (37), die eine erste flache Wicklung (10) umfasst, die auf einer Seite eines flachen Substrats (11) gebildet ist, wobei die erste Wicklung (10) eine zur Ebene des Substrats (11) lotrechte Achse hat und wobei die Antenne eine zweite Wicklung (18) mit einer zur Ebene des Substrats (11) parallelen Achse umfasst, **dadurch gekennzeichnet, dass** die zweite Wicklung (18) um eine dünne Schicht (23) aus einem Material mit hoher magnetischer Permeabilität gewickelt ist, die auf die besagte Seite des Substrats (11) aufgebracht ist.

2. Antenne nach Anspruch 1, **dadurch gekennzeichnet, dass** das Material mit hoher magnetischer Permeabilität eine relative magnetische Permeabilität von über 500 hat.

3. Antenne nach Anspruch 1 oder 2, **dadurch gekennzeichnet, dass** sie eine dritte Wicklung (30) mit einer zu den Achsen der ersten Wicklung (10) und der zweiten Wicklung (18) lotrechten Achse umfasst, die um eine zur Ebene des Substrats (11) parallele zusätzliche dünne Schicht (31) aus einem Material mit hoher magnetischer Permeabilität gewickelt ist.

4. Antenne nach Anspruch 3, **dadurch gekennzeichnet, dass** das Material mit hoher Permeabilität der zusätzlichen dünnen Schicht (31) eine relative Permeabilität von über 500 hat.

5. Antenne nach einem der Ansprüche 3 und 4, **dadurch gekennzeichnet, dass** eine elektrisch isolierende Schicht (26) zwischen der zweiten (18) und dritten Wicklung (30) angeordnet ist.

6. Antenne nach einem der Ansprüche 3 bis 5, **dadurch gekennzeichnet, dass** die zweite Wicklung (18) und dritte Wicklung (30) sich entlang der Symmetrieachsen der ersten Wicklung (10) erstrecken.

7. Antenne nach einem der Ansprüche 1 bis 6, **dadurch gekennzeichnet, dass** das Material mit hoher magnetischer Permeabilität eine zur Achse der entsprechenden Wicklung (18, 30) parallele Achse mit höherer magnetischer Suszeptibilität aufweist.

8. Antenne nach Anspruch 3, **dadurch gekennzeichnet, dass** die zweite bzw. dritte Wicklung (18, 30) jeweils eine Fläche auf einer zur Ebene des Substrats (11) parallelen Ebene bedeckt, die sehr viel kleiner ist als die Fläche, die von der ersten Wicklung (10) begrenzt wird.

9. Herstellungsverfahren für eine Antenne nach einem der Ansprüche 1 bis 8, **dadurch gekennzeichnet, dass** es umfasst:
- das Aufbringen metallisierter Spuren, welche die erste Wicklung (10) bilden, auf das Substrat (11),
- das Aufbringen unterer metallisierter Spuren (16, 17) der zweiten Wicklung (18),
- das Aufbringen der dünnen Schicht (23) des Materials mit hoher magnetischer Permeabilität parallel zur Ebene des Substrats (11),
- die Herstellung von oberen metallisierten Spuren (24, 25) der zweiten Wicklung (18) bzw. seitlichen metallisierten Spuren auf der dünnen Schicht (23) und an ihrem Umfang, welche die oberen metallisierten Spuren (24, 25) und die unteren metallisierten Spuren (16, 17) der zweiten Wicklung (18) miteinander verbinden.

10. Herstellungsverfahren nach Anspruch 9, **dadurch gekennzeichnet, dass** es ferner umfasst:
- das Aufbringen einer elektrisch isolierenden Schicht (26), welche die dünne Schicht (23) und die zweite Wicklung (18) bedeckt,
- das Aufbringen unterer metallisierter Spuren (27, 28, 29) einer dritten Wicklung auf die elektrisch isolierende Schicht (26), das Aufbringen einer zusätzlichen dünnen Schicht (31) aus einem Material mit hoher magnetischer Permeabilität parallel zur Ebene des Substrats (11),
- die Herstellung von oberen metallisierten Spuren (32, 33, 34) der dritten Wicklung (30) bzw. seitlichen metallisierten Spuren auf der zusätzlichen dünnen Schicht (31) und an ihrem Umfang, welche die oberen metallisierten Spuren (32, 33, 34) und die unteren metallisierten Spuren (27, 28, 29) der dritten Wicklung (30) miteinander verbinden.
